# EUROPÄISCHE PATENTANMELDUNG

(11) **EP 1 107 141 A2**
(43) Veröffentlichungstag der Anmeldung: **13.06.2001**
(21) Anmeldenummer: 00125816.9
(22) Anmeldetag: 24.11.2000
(51) Int. Cl.: G06F 17/60

(54) **Verfahren zum schnellen Abgeben einer Wertpapier-, Futureskontrakt- oder Warenorder und Computersystem zu diesem Zweck**

(30) Priorität: 02.12.1999 DE 19958100; 09.10.2000 US 685509
(71) Anmelder: Wengert, Horst, 85737 Ismaning (DE); Laqua, Hannelore, 85737 Ismaning (DE)
(72) Erfinder: Wengert, Horst, 85737 Ismaning (DE)
(74) Vertreter: von Hellfeld, Axel, Dr. Dipl.-Phys.

(57) **Zusammenfassung**

Ein Verfahren zum schnellen Abgeben einer Wertpapier-, Futureskontrakt- oder Warenorder, bei dem
- auf einem Bildschirm in einem Koordinatensystem eine Chartkurve angezeigt wird, die den ständig aktualisierten Verlauf des Kurses eines bestimmten Wertpapiers, Futureskontrakts oder einer bestimmten Warenart anzeigt,
- auf eine erste Eingabe des Benutzers hin eine Bedienungsoberfläche geöffnet wird, mit der ein Wertpapier-, Futureskontrakt- oder Warenorderprogramm bedient wird, wobei zumindest das/der mittels des Orderprogramms zu bestellende Wertpapier/Futureskontrakt oder die Ware nicht durch den Benutzer eingegeben wird,
- auf eine zweite Eingabe des Benutzers hin eine Order zum Kauf oder Verkauf des bestimmten Wertpapiers/Futureskontrakts oder der bestimmten Ware zu einem Orderempfänger abgesandt wird.

## Beschreibung

Die Erfindung betrifft ein Verfahren zum schnellen Abgeben einer Wertpapier-, Futureskontrakt- oder Warenorder und ein Computersystem zu diesem Zweck, wobei Wertpapiere, Futureskontrakte oder Waren geordert werden, deren Preise kurzfristigen Änderungen unterliegen. Eine Order ist ein Auftrag zum Kauf oder Verkauf etwa eines Wertpapiers.

An Börsen werden Wertpapiere, Futureskontrakte und auch bestimmte Waren gehandelt, deren Preise kurzfristigen Änderungen unterliegen. Im folgenden werden die Futureskontrakte und Waren nicht mehr eigens genannt, die Beschreibung betrifft aber auch das Ordern von an einer Börse beliebiger Art gehandelten Futureskontrakten und Waren.

Es wird an der Börse (z.B. EUREX) im allgemeinen fortlaufend, wie z. B. in sekündlichen Abständen ein neuer Kurs der Wertpapiere festgelegt. Händler, die sich auf den An- und Verkauf dieser Wertpapiere spezialisiert haben, verwenden zunehmend Computersysteme. Einerseits verfolgen sie dabei den Kurs der Wertpapiere durch das Betrachten von sogenannten Chartkurven bzw. Charts. Die Chartkurven zeigen den Verlauf des Kurses eines bestimmten Wertpapiers über der Zeit, wobei der Maßstab der Zeitachse beliebig gewählt werden kann, also auch der Kursverlauf über mehrere Tage angezeigt werden kann. Dieser Kursverlauf wird ständig aktualisiert. Jedesmal, wenn eine Zeiteinheit verstrichen ist bzw. eine Preisbewegung stattgefunden hat, wird ein weiterer Punkt hinzugefügt und die Kurve um die Verbindung zwischen dem vorigen und diesem Punkt verlängert. Wird bei jeder Preisbewegung ein Punkt hinzugefügt, so wird dieser als Tic bezeichnet. Hierfür steht der Computer, der die Chartkurve erzeugt, in ständigem Datenkontakt mit einem Datenprovider, der Daten direkt von der Börse bezieht. Ein solcher Kontakt kann über eine Telefon- oder Internetleitung oder sogar über Satellit erfolgen.

Will nun der Händler aufgrund des Verlaufs der Chartkurve, also des Kurses des Wertpapiers, eine Kauf- oder Verkaufsentscheidung treffen, so bedient er sich üblicherweise eines Wertpapier-Orderprogramms. Dieses Programm wird gewöhnlich über ein auf einem anderen Bildschirm gezeigtes Fenster bedient, das bereits geöffnet ist, um Zeitverluste zu vermeiden. Nun muß der Börsenhändler eine Vielzahl von Daten eingeben: den Befehl (Kauf oder Verkauf, evtl. mit Preisbegrenzung), eine Kennzeichnung für das bestimmte Wertpapier, den Preis (oder eine Preisgrenze) und die Stückzahl. Dabei müssen mindestens 12 bis 14 Zeichen über die Computertastatur eingetippt werden.

Bei der Kauf- oder Verkaufsentscheidung können Sekunden eine Rolle spielen. Der Händler ist also darauf angewiesen, diese Daten möglichst schnell in den Computer einzutippen. Hierbei ist höchste Vorsicht angezeigt, da ein Vertippen unweigerlich zum Kauf oder Verkauf des falschen Wertpapiers, zu einem falschen Preis o.ä. führt.

### ZUSAMMENFASSUNG DER ERFINDUNG

Es ist daher Aufgabe der Erfindung, ein Verfahren und Computersystem bereitzustellen, mit dem eine Wertpapierorder, Futureskontrakt- oder Warenorder schnell und zuverlässig abgegeben werden kann.

Zur Lösung dieser Aufgabe wird ein Verfahren zum schnellen Abgeben einer Wertpapier-, Futureskontrakt- oder Warenorder bereitgestellt, bei dem
- auf einem Bildschirm in einem Koordinatensystem eine Chartkurve angezeigt wird, die den ständig aktualisierten Verlauf des Kurses eines bestimmten Wertpapiers, Futureskontrakts oder einer bestimmten Warenart anzeigt,
- auf eine erste Eingabe des Benutzers hin eine Bedienungsoberfläche geöffnet wird, mit der ein Wertpapier-, Futureskontrakt oder Warenorderprogramm bedient wird, wobei zumindest das/der mittels des Orderprogramms zu bestellende Wertpapier/Futurekontrakt oder die Ware nicht durch den Benutzer eingegeben wird, - auf eine zweite Eingabe des Benutzers hin eine Order zum Kauf oder Verkauf des bestimmten Wertpapiers/Futureskontrakts oder der bestimmten Ware zu einem Orderempfänger abgesandt wird.

Diese Lösung hat den Vorteil, daß der Benutzer nicht ein Orderprogramm in einem getrennten Fenster öffnen muß, in das er eine Kennzeichnung für das zu bestellende Wertpapier eingeben muß, sondern die Bedienungsoberfläche wird aus dem Programm, mit der eine Chartkurve angezeigt wird, heraus geöffnet, und das Wertpapier ist dadurch eindeutig festgelegt: Die Order zum Kauf oder Verkauf betrifft dasjenige Wertpapier, dessen Kurs auf der Chartkurve angezeigt wird. Durch die Verknüpfung des Orderprogramms mit dem Programm zur Erstellung der Chartkurve erfolgt die Festlegung des Wertpapiertyps also automatisch. Damit spart der Benutzer eine bestimmte Anzahl von Anschlägen bei der Eingabe und kann sich insbesondere bezüglich der Art des Wertpapiers nicht irren. Die obige Formulierung, daß "zumindest das mittels des Orderprogramms zu bestellende Wertpapier nicht durch den Benutzer eingegeben wird" läßt die Möglichkeit zu, auch weitere normalerweise einzugebende Angaben so vorzugeben, daß sie nicht mehr beim Orderbefehl eingegeben werden müssen, z.B. die Stückzahl.

Vorteilhafterweise wird die genannte Bedienungsoberfläche auf dem gleichen Bildschirm erzeugt, auf dem auch das genannte Koordinatensystem mit der Chartkurve angezeigt wird.

Vorteilhaft erfolgt die erste Eingabe mit dem Starten der Chartkurvenanzeige. In diesem Falle ist die Bedienungsoberfläche also während des Betrachtens der Chartkurve geöffnet, und der Benutzer muß zum Absenden z. B. einer Order nur die zweite Eingabe vornehmen, wobei er möglicherweise vorher noch einen Preis einzugeben hat.

Alternativ erfolgt die erste, einfache Eingabe durch Druck auf zumindest eine Taste einer Tastatur. Die Bedienungsoberfläche kann also z. B. mittels Wahl einer Tastenkombination geöffnet werden. Diese Alternative hat den Vorteil, daß für jeden Befehl (Kaufen bzw. Verkaufen mit oder ohne Preisgrenze) eine eigene Bedienungsoberfläche geöffnet werden kann. Außerdem kann diese den aktualisierten Datenstand berücksichtigen. So kann ein beispielsweise über Pfeile auf der Tastatur zu bedienender Cursor in dem Koordinatensystem an einer Stelle sitzen, die den Preis bestimmt, der für die Order als Kauf- oder Verkaufspreis oder als Grenze für denselben (nach oben oder unten hin) relevant ist.

Anstelle durch das Drücken auf eine Taste kann die erste Eingabe auch durch zumindest einen Mausklick erfolgen. Beispielsweise kann sie durch zwei Mausklicke erfolgen (oder durch ein zuvoriges Drücken einer Taste und einen Mausklick), wobei der erste Mausklick den Befehl (Kaufen oder Verkaufen usw.) bestimmt, der beispielsweise in einer Befehlsleiste als Icon dargestellt ist, welches zum Öffnen der Bedienungsoberfläche angeklickt werden muß. Der zweite Mausklick bestimmt dann den Preis, der für die Order relevant ist: er wird über die Stelle bestimmt, auf der der Mauszeiger in dem Koordinatensystem für die Chartkurve sitzt, üblicherweise also durch die Y-Koordinate des Mauszeigers. Unter dem Preis, der für die Order relevant ist, wird hier der Preis verstanden, der sonst in das Orderprogramm eingegeben werden müßte, also beispielsweise bei einem Kauf zu einem Höchstpreis die Höchstpreisgrenze.

Durch diese Ausführungsform wird dem Benutzer seine Arbeit weiter vereinfacht. Er muß nur schnell mit der Maus auf die Oberfläche in dem Bildschirm bzw. Fenster mit der Chartkurve klicken und erspart sich somit die Eingabe des Preises. Zum einen bedeutet auch dies wieder einen Zeitgewinn, da eine Maus schneller zu bedienen ist, als ein Preis als Zahlenwert eingetippt werden kann. Zum anderen bedeutet dies eine erhöhte Sicherheit, da dem Benutzer dadurch, daß er in dem Koordinatensystem der Chartkurve eine Stelle anklickt, keinen abstrakten Zahlenwert des Preises eingibt, sondern anhand der Lage des angeklickten Punktes im Verhältnis zur Chartkurve ein Gefühl für das Verhältnis des Preises zum bisherigen Kurs entwickelt, wodurch die Fehlerträchtigkeit verringert wird.

Nach einer bevorzugten Ausführungsform wird der Preis in der Bedienungsoberfläche nach dem Anklicken auch mit Zahlen angezeigt. Der Benutzer hat somit eine Kontrolle. Vorteilhaft kann der angezeigte Preis auch durch den Benutzer abgeändert werden, bevor die zweite Eingabe zur eigentlichen Order erfolgt. Das Abändern kann manuell erfolgen, indem beispielsweise der Preis nun doch eingetippt wird, oder in der Bedienungsoberfläche sind nach oben oder unten weisende Pfeile vorgesehen, wobei man durch Mausklick auf die Pfeile den angezeigten Preis erhöhen bzw. erniedrigen kann. Man kann vorteilhaft auch vorsehen, daß der Peis durch Verschieben der Bedienungsoberfläche selbst in dem Koordinatensystem der Chartkurve geändert werden kann. In diesem Falle wäre also die Lage der Bedienungsoberfläche mit dem Preis korreliert.

Nach einer bevorzugten Ausführungsform wird der Preis und/oder eine Preisgrenze durch einen Balken in dem Koordinatensystem für die Chartkurve angezeigt. Da bei üblichen Chartkurven der Preis auf der Y-Achse dargestellt wird, handelt es sich hier um einen waagerechten Balken. Der Balken muß nicht quer über dem gesamten Bildschirm angezeigt werden, sondern kann knapp hinter dem letzten Datenpunkt der Chartkurve beginnen. Zwar könnte das System mit der Anzeige des Balkens warten, bis die zweite Eingabe vorgenommen wurde, so daß er etwa bei einem Verkauf mit Mindestpreis diese Mindestpreisgrenze anzeigt. Vorteilhaft erfolgt die Anzeige des Balkens bereits vor der zweiten Eingaben so daß anhand der Lage des Balkens besser zu entscheiden ist, ob tatsächlich die auf der Bedienungsoberfläche angezeigte Bestellung gewünscht ist.

Für den Balken können verschiedene Farben gewählt werden, z.B. rot bei Anzeige des Mindestpreises bei Verkauf zu einem Mindestpreis und grün zur Anzeige des Höchstpreises bei einem Befehl zu einem Kauf zu einem Höchstpreis. Unterschiedliche Schraffuren des Balkens können weitere Informationen angeben, wie dies weiter hinten bei der Vorstellung einer bevorzugten Ausführungsform dargelegt wird.

Um die Geschwindigkeit der Order weiter zu erhöhen, ist auf der Bedienungsoberfläche eine bestimmte Wertpapierstückzahl bereits vorgegeben, die der Händler vorab wählen kann. Wie zuvor der Preis kann hier auch die Wertpapierstückzahl in der Bedienungsoberfläche angezeigt werden und vorzugsweise durch den Benutzer abgeändert werden.

Die Bedienungsoberfläche soll in der Regel so gewählt sein, daß sie nur in einem kleinen Teil des Bildschirms, beispielsweise als kleiner Kasten, geöffnet wird, so daß die Chartkurve im wesentlichen noch sichtbar bleibt. Beispielsweise kann der Kasten bei Verkauf zu einem Mindestpreis oberhalb des Balkens dargestellt werden, der rechts von der Chartkurve beginnt. In diesem Falle würde sich im Idealfall die Chartkurve dem Balken nach oben nähern, bis der Balken erreicht wird und der Befehl Wirksamkeit entfaltet. Während dieser Zeit käme es zu keiner Überschneidung der Darstellung der Chartkurve mit dem Kasten für den Befehl.

Bisher wurde das Verfahren beschrieben, mit dem zunächst eine Bedienungsoberfläche geöffnet wird. Dieses Verfahren kann dahingehend perfektioniert werden, daß nicht eine einfache erste Eingabe und eine einfache zweite Eingabe notwendig sind, sondern daß bei auf dem Bildschirm angezeigter Chartkurve auf eine einfache Eingabe des Benutzers hin durch ein Orderprogramm direkt eine Order zum Kauf oder Verkauf des Wertpapiers abgesandt wird. (Unter einfacher Eingabe wird hier vorzugsweise ein Befehl verstanden, der durch eine einzige Aktion, wie z. B. einen einzigen Tastendruck oder Mausklick, ausführbar ist.) Bei diesem Schnellverfahren wäre sowohl die Stückzahl vorgegeben, als auch der Preis, der durch den Preis bestimmt werden würde, der in der Chartkurve zum Zeitpunkt der einfachen Eingabe hin als aktueller Marktpreis angezeigt wird. Bei einem Marktverkauf würde der Verkauf zum gerade aktuellen Preis erfolgen. Beim Kauf mit einer Preisgrenze könnte z.B. durch das System vorgegeben sein, daß als für die Order relevanter Preis, also als Grenzpreis, ein Preis bestimmt wird, der von dem aktuellen Marktpreis (letzter Tic) um einen bestimmten Prozentsatz abweicht.

Dieses System hat den Vorteil, daß nicht einmal mehr eine zweite Eingabe erforderlich ist, durch eine einfache Eingabe des Benutzers also direkt eine Order abgesandt wird und somit weiter Zeit gespart wird. Andererseits hat dieses Verfahren gegenüber dem zuvor genannten den Nachteil, daß es beim irrtümlichen Betätigen etwa einer Taste oder der Maus kein Zurück mehr gibt, sondern die Order zu dem Orderempfänger, also z.B. der Börse über die Datenverbindung abgesandt wird und auf den Markt gebracht wird. Hierfür könnte aber eine Rückfrage auf dem Bildschirm, die wahlweise vom Benutzer vorab aktivierbar ist, zur Erhöhung der Sicherheit vorgesehen werden.

Die Erfindung stellt außerdem ein Computersystem zum schnellen Abgeben von Wertpapier-, Futureskontrakt- oder Warenordern bereit, mit:
a) einem ersten Softwaresystem, mit dem eine Chartkurve eines Wertpapiers, Futureskontraks oder einer bestimmten Warenart auf einem Bildschirm darstellbar ist,
b) einem zweiten Softwaresystem, mit dem eine Wertpapier-, Futureskontrakt- oder Warenorder an einen Orderempfänger absendbar ist,
dadurch gekennzeichnet, daß die ersten und zweiten Softwaresysteme derart miteinander verknüpft sind, daß Daten, die von dem ersten Softwaresystem verwaltet werden oder in diesem erzeugt werden, in das zweite Softwaresystem übertragbar sind, insbesondere durch eine einfache Eingabe des Benutzers.

Unter Softwaresystem wird hier eine aufwendige Software verstanden, die zwar eine Einheit bildet, aber aus unterschiedlichen Softwareteilen zusammengesetzt sein kann. Beispielsweise kann das erste Softwaresystem zahlreiche sogenannte Softwaretools enthalten, die über Icons (Bildsymbole) in einem Fenster aufgerufen werden können.

Das erfindungsgemäße Computersystem hat den Vorteil, daß der Händler, der eine Wertpapier- oder Warenorder abgeben will, nicht zwei voneinander völlig getrennte Softwaresysteme verwenden muß, sondern daß das Order-Softwaresystem auf Daten, die von dem ersten Softwaresystem verwaltet werden oder in diesem erzeugt werden, zugreifen kann, so daß der Händler einige dieser Daten nicht mehr eingeben muß und dadurch Zeit gewinnt.

Die Daten, die von dem ersten Softwaresystem verwaltet werden, sind beispielsweise die Daten der Chartkurve. Daten können von dem ersten Softwaresystem für das zweite Softwaresystem z. B. dadurch erzeugt werden, daß in der grafischen Darstellung der Chartkurve in einem Koordinatensystem mittels eines Cursors oder Mauszeigers (Mauszeiger ist jede Darstellung der Mauskoordinaten) mindestens eine Koordinate ausgewählt wird, deren Wert insbesondere fortlaufend und automatisch an das zweite Softwaresystem übermittelt wird. Da eine der Koordinaten für den Preis steht, kann dieser auch durch Interaktion beispielsweise einer Maus mit der grafischen Oberfläche der Chartkurve bestimmt werden und in das Order-Softwaresystem übertragen werden.

Bevorzugt sind auch Daten, die von dem zweiten Softwaresystem verwaltet oder erzeugt werden, in das erste Softwaresystem übertragbar. Beispielsweise kann so durch Rückübertragung der obengenannte Balken-Preise erzeugt werden.

Gemäß einer bevorzugten Ausführungsform ist das zweite Softwaresystem in das erste Softwaresystem eingebettet. Dies bedeutet eine vollständige Unterordnung des zweiten Softwaresystems mit dem Orderprogramm unter das erste Softwaresystem, das die Chartkurve erzeugt. Von dem ersten Softwaresystem aus kann das Orderprogramm dann direkt aufgerufen werden. Beispielsweise können in der Oberfläche, die durch das erste Softwaresystem erzeugt wird, Icons dargestellt sein, durch deren Anklicken das zweite Softwaresystem aktiviert wird. Das zweite Softwaresystem hat damit dann die Funktion eines Softwaretools für das erste Softwaresystem.

Gemäß einem zweiten Aspekt der Erfindung werden über einen Provider Daten aus einem Orderbuch bezogen. Ein Orderbuch enthält die gegenwärtig auf dem Markt befindlichen Ordern, die durch eine Orderstückzahl und einen Mindestverkaufspreis oder einen Höchstkaufpreis bestimmt sind. Nun wird in dem Koordinatensystem der Chartkurve zumindest ein Teil der Orderstückzahlen angezeigt, wobei die Orderstückzahlen grafisch den ihrem zugehörigen Preis entsprechenden Koordinaten zugeordnet sind.

Dadurch wird dem Wertpapierhändler die Auswertung der Daten aus dem Orderbuch erleichtert. Anstelle sich die Daten aus dem Orderbuch numerisch in einem getrennten Bildschirm oder getrennten Fenster anzeigen zu lassen, stehen die Daten aus dem Orderbuch in demselben Bildschirm wie die Chartkurve zur Verfügung, und dies in einer grafisch mit der Chartkurve verknüpften Art und Weise. Der Wertpapierhändler kann diese Orderstückzahlen zu der Chartkurve in Beziehung setzen, d. h. er kann anhand des letzten Datenpunkts der Chartkurve sehen, welche Ordern wahrscheinlich in nächster Zeit ausgeführt werden und daraus kann er auch möglicherweise eine Vorhersage des künftigen Kurses des Wertpapiers ableiten.

Diese Darstellung ist von besonderem Interesse im Zusammenhang mit dem oben genannten Verfahren zum schnellen Abgeben einer Order, bei dem für die Abgabe der Order kein zusätzliches Fenster geöffnet werden muß. Diese Art der Darstellung der aus einem Orderbuch erhaltenen Daten kann jedoch auch ganz allgemein und unabhängig von dem oben genannten Verfahren die Auswertung der in den Orderbuch enthaltenen Daten erleichtern.

Um die Orderstückzahlen grafisch den ihrem zugehörigen Preis entsprechenden Koordinaten zuzuordnen, stehen verschiedene Möglichkeiten zur Verfügung.

So kann entlang der jeweiligen Koordinate parallel zur Zeitachse ein Balken eingezeichnet werden, neben, auf oder unter den die Orderstückzahlen geschrieben werden, wobei bevorzugt alle Balken und Orderstückzahlen an derselben Stelle der Zeitachse angeordnet sind. Ist die Zeitachse z. B. die x-Achse, so können die Balken hinter dem letzten Datenpunkt der Chartkurve und untereinander angeordnet werden und die Orderstückzahlen neben den Balken geschrieben werden. Wird dann der Chartkurve ein zusätzlicher Datenpunkt angefügt, so müssen die Balken nicht unbedingt nach rechts weiterrücken, sondern es kann sich auch die Chartkurve nach links verschieben, so daß der Abstand zwischen dem letzten Datenpunkt und den Balken immer gleich bleibt.

Eine weitere Möglichkeit der Zuordnung der Orderstückzahl zu der Koordinate, die dem der Orderstückzahl zugehörigen Preis entspricht, ist es, auf einem Koordinatenpunkt mit der jeweiligen Koordinate eine Markierung, etwa ein Kreuz oder eine andere geometrische Figur wie einen kleinen Kreis, ein kleines Dreieck oder ein kleines Viereck oder einen Stern einzuzeichnen, neben, auf oder unter den die jeweilige Orderstückzahl geschrieben wird.

Die Markierung kann auch ganz weggelassen werden und die Orderstückzahl könnte einfach an der Stelle der Koordinate angezeigt werden. In diesem Falle wäre es von Vorteil, wenn die Zahlen etwas kleiner dargestellt würden als die typischen Abstände zwischen verschiedenen Punkten des Koordinatensystems sind.

Außer den Orderstückzahlen können auch weitere Informationen in dem Koordinatensystem für die Chartkurve angezeigt werden. So können neben, auf oder unter den Orderstückzahlen für die Mindestverkaufspreise die Summen der Orderstückzahlen für alle niedrigeren und gleichen Mindestverkaufspreise und neben, auf oder unter den Orderstückzahlen für die Höchstkaufpreise die Summen der Orderstückzahlen für alle höheren und gleichen Höchstkaufpreise angezeigt werden. Dies stellt eine nützliche Information dar, weil jemand, der bereit ist, höchstens zu einem bestimmten Preis zu kaufen, selbstverständlich auch bereit ist, zu einem etwas niedrigeren Preis zu kaufen, so daß er den Kaufinteressenten für den niedrigeren Preis ebenfalls zugerechnet werden kann.

Gemäß einem dritten Aspekt der Erfindung werden dem Benutzer des Computerprogramms, das die Chartkurve darstellt, auch Informationen hinsichtlich des Umfangs der zuletzt getätigten Umsätze bezüglich des bestimmten Wertpapiers zur Verfügung gestellt. Diese Informationen können ebenfalls über einen Provider bezogen werden. Üblicherweise werden sie numerisch auf einem getrennten Bildschirm oder einem getrennten Fenster dargestellt. Die neue Idee besteht darin, auf dem Bildschirm eine Tic-Chartkurve anzuzeigen und neben den einzelnen Tics die jeweilige Stückzahl der getätigten Umsätze anzuzeigen (zu dem Zeitpunkt und dem Preis, die durch den Tic angezeigt werden). Bei einer Tic-Chartkurve wird für jeden Tic ein eigener Datenpunkt angezeigt, und es erfolgt keine Darstellung der Mittelung, während bei einer Balkendarstellung eine Darstellung der Mittelung der Marktpreise über einen bestimmten Zeitraum erfolgt. Die Tic-Chartkurve ist dabei entweder mit der auf dem Bildschirm gezeigten Haupt-Chartkurve identisch, oder bei der auf dem Bildschirm gezeigten Haupt-Chartkurve ist die Zeitachse so gewählt, daß die Zeitabstände zwischen den einzelnen Punkten der Chartkurve größer als die typischen Zeitabstände zwischen zwei Tics sind, sie ist also keine Tic-Chartkurve, sondern eine Balken-Chartkurve. Sollte letzteres der Fall sein, so wird dieser dritte Aspekt der Erfindung verwirklicht, indem zusätzlich zu dieser Haupt-Chartkurve eine Tic-Chartkurve in einem kleinen Ausschnitt des Koordinatensystems für eine bestimmte Anzahl der letzten Tics angezeigt wird, wobei dann neben den einzelnen Tics die jeweilige Stückzahl der getätigten Umsätze angezeigt wird.

Das Anzeigen der jeweiligen Stückzahl der getätigten Umsätze neben den einzelnen Tics erleichtert es dem Wertpapierhändler, sich einen Überblick über die zuletzt getätigten Umsätze zu erschaffen und zwar besser, als wenn er die Daten nur numerisch in einem von der Tic-Chartkurve getrennten Fenster angezeigt hätte. Auch dadurch wird seine Entscheidung zum Abgeben einer Order erleichtert, da ihm die hierfür hilfreichen Informationen in übersichtlicher Weise gegeben werden.

Dieser dritte Aspekt der Erfindung trägt somit ebenfalls dazu bei, daß der Wertpapierhändler eine Wertpapierorder schnell abgeben kann. Seine besondere Bedeutung gewinnt dieser dritte Aspekt insbesondere in dem oben beschriebenen Verfahren zum schnellen Abgeben einer Wertpapierorder. Dieser dritte Aspekt kann jedoch auch unabhängig von diesem Verfahren verwirklicht werden, zum Beispiel in Kombination mit dem zweiten Aspekt, dem grafischen Anzeigen der Daten aus dem Orderbuch.

### KURZE BESCHREIBUNG DER ZEICHNUNGEN

Eine bevorzugte Ausführungsform des erfindungsgemäßen Verfahrens und Systems wird nun anhand der Zeichnungen beschrieben. Es zeigt:
- Fig. 1: eine Chartkurve mit mehreren geöffneten Bedienungsoberflächen für Orderprogramme;
- Fig. 2a: eine Bedienungsoberfläche für den Befehl "Market Buy" vor dem Absenden des Befehls zum Kaufen;
- Fig. 2b: die Bedienungsoberfläche des Befehls "Market Buy" nach vollzogenem Kaufbefehl;
- Fig. 3: ein Flußdiagramm, das das Abschicken eines Befehls darstellt,
- Fig. 4: eine Chartkurve, in der die Daten aus einem Orderbuch grafisch angezeigt sind, mit zusätzlich einem Ausschnitt einer Tic-Chartkurve,
- Fig. 5: die Chartkurve aus Fig. 4 mit einer geöffneten Bedienungsoberfläche für ein Orderprogramm.

### BESCHREIBUNG EINER BEVORZUGTEN AUSFÜHRUNGSFORM

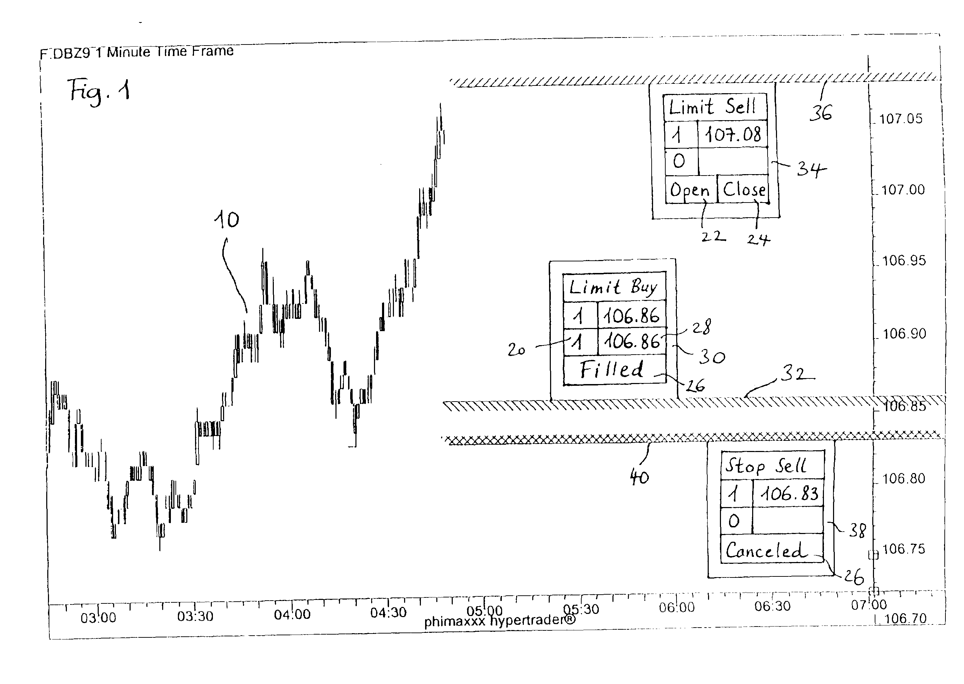

Figur 1 zeigt die Darstellung einer Chartkurve 10, hier in der sogenannten Balkenform. Zur Anzeige der Chartkurve wird das Programm phimaxxx hypertrader der Firma Hannelore Laqua Software verwendet. Auf der X-Achse ist die Chicago-Zeit dargestellt, während die Y-Achse die Preisachse ist. In Fig. 1 repräsentiert jeder Balken den Preisverlauf innerhalb einer Minute. Das Computersystem ist über eine Datenleitung mit einem Datenprovider verbunden, der jeweils den aktuell hinzuzufügenden Punkt mitteilt. Das Computersystem kann sogar mit mehreren Datenprovidern verbunden sein, wobei der jeweils letzte Datenpunkt von einem Datenprovider bereitgestellt wird, bei dem die Daten der Börse besonders schnell zur Verfügung stehen, während die anderen Punkte von einem zweiten Datenprovider mitgeteilt werden.

Aus diesem Programm heraus ist nun das Orderprogramm ICOS (Intelligent Chart Ordering System) der Firma Hannelore Laqua Software aufrufbar. Mittels dieses Programms können über eine Datenleitung Orderbefehle an die Börse als Orderempfänger gesandt werden. Von der Börse sind gegenwärtig sechs verschiedene Arten von Befehlen zugelassen. Für jeden Befehl ist in einer Symbolleiste ein Icon vorgesehen, mit dem eine zu dem Befehl gehörige Bedienungsoberfläche geöffnet werden kann.

Die sechs von der Börse zugelassenen Befehle werden im folgenden dargestellt.

"Market Buy" und "Market Sell" sind die Befehle zum Kaufen bzw. Verkaufen eines Wertpapiers zum gegenwärtigen Marktpreis.

"Limit Buy" und "Limit Sell" sind die Befehle, mit denen der Auftrag zum Kauf eines Wertpapiers zu einem bestimmten Höchstpreis bzw. Verkauf zu einem Mindestpreis gegeben wird. Sollten durch das Wertpapier die angegebenen Preisgrenzen überhaupt nicht erreicht werden, so wird der Kauf bzw. Verkauf nicht durchgeführt.

Die Befehle "Stop Buy" und "Stop Sell" stehen für die Anweisung, ein bestimmtes Wertpapier zu kaufen, wenn sein Kurs einen bestimmten Höchstwert erreicht bzw. ein Wertpapier zu verkaufen, wenn sein Kurs einen bestimmten Mindestwert erreicht. Der Kauf bzw. Verkauf finden nach Überschreitung der Grenze zum Marktpreis statt, d.h. der Befehl wird dann zu einem Market-Befehl. Die beiden Befehle dienen dazu, daß durch den Händler eine Grenze vorgegeben werden kann, ab der gewissermaßen notfallmäßig doch gekauft oder verkauft wird, wenn ein noch nachteiligerer Kursverlauf zu befürchten ist. Häufig werden sie zusätzlich zu dem Befehl "Limit Buy" bzw. "Limit Sell" abgegeben.

Für jeden der genannten Befehle steht eine Bedienungsoberfläche zur Verfügung, die nach dem Drücken auf ein entsprechendes Icon geöffnet wird. Teilweise ist für diese erste Eingabe zum Öffnen der Bedienungsoberfläche ein weiterer Mausklick erforderlich, mit dem der in dem Befehl angegebene Preis bestimmt wird.

Die Beschreibung beginnt zunächst mit der Bedienungsoberfläche des Befehls "Market Buy". Nach Klicken mit dem Mauszeiger auf das entsprechende Icon wird die in Figur 2a gezeigte Bedienungsoberfläche geöffnet. Diese besteht aus einem Kasten, der in einem kleinen Teil des Fensters bzw. der Bildschirmdarstellung mit der Chartkurve 10 angezeigt wird.

Der Rand 12 des Kastens ist zunächst grau als Zeichen dafür, daß die Order noch nicht im Markt ist. Er kann zu einem späteren Zeitpunkt weitere Farben einnehmen, nämlich magenta, wenn die Order im Markt ist, gelb, wenn die Order abgesandt, aber noch nicht bestätigt ist, rot, wenn die Order abgelehnt werden sollte und wieder grau, wenn die Order ausgeführt ist. In dem oberen Teilkasten bzw. Feld 14 ist der Name der Order, hier also "Market Buy" gezeigt. Das Feld 16 dient bei den Nicht-"Market"-Befehlen der Angabe eines Mindest- oder Höchstpreises. Es bleibt hier frei, da ja zu dem gerade herrschenden Marktpreis (ohne jegliche Vorgabe bezüglich desselben) gekauft wird.

In dem Feld 18 ist die zu bestellende Stückzahl des Wertpapiers angegeben. Diese ist, um dem Benutzer das Eintippen zu ersparen, auf "1" vordefiniert. Sie kann jedoch einfach geändert werden, indem (ohne zuvorige Aktivierung des Feldes) über die Tastatur ein anderer Zahlenwert eingegeben wird.

Im Feld 20 ist die Stückzahl gezeigt, die an der Börse bereits gekauft wurde. Das Feld 20 ist deswegen von Bedeutung, weil an der Börse zu einem bestimmten Zeitpunkt nicht immer alle Wertpapiere erhältlich sind. Bei einer Bestellung von 100 Wertpapieren kann es z.B. vorkommen, daß der Kaufbefehl zunächst nur für 50 Wertpapiere ausgeführt werden kann. Der Kaufbefehl für die restlichen 50 Wertpapiere bleibt im Markt. Er kann jedoch jederzeit durch Mausklick auf ein Feld "Cancel" aus dem Markt genommen werden.

Im unteren Teil des Kastens stehen die "Druckknöpfe" "Open" 22 und "Close" 24 zur Verfügung. Das ist hier die "zweite Eingabe" im Sinn des Anspruchs 1. Durch Anklicken des Feldes 22 kann eine Position geöffnet werden, wie das Stellen eines Befehls auf den Markt unter den Händlern genannt wird. Die Order wird also abgesandt. Das Feld 24 steht für das Schließen einer Position. Dies wird dann anstelle von Feld 22 betätigt, wenn zuvor irgendwann für dasselbe Wertpapier eine Position geöffnet wurde, wenn also ein Wertpapier gekauft wird, das zuvor verkauft wurde. (Letzteres ist an der Börse für ein Börsenmitglied in dieser Reihenfolge möglich.)

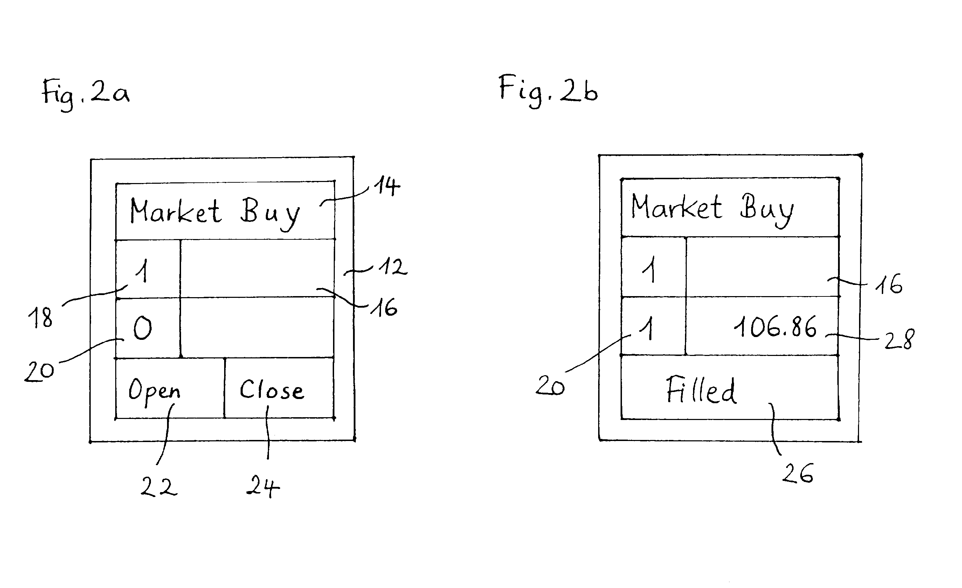

Figur 2b zeigt die Bedienungsoberfläche, nachdem die Order ausgeführt wurde. Die Felder 22 und 24 wurden nun durch das Feld 26 ersetzt, indem das Wort "Filled" angezeigt ist, das angibt, daß die Order ausgeführt wurde. Außerdem ist im Feld 20 die Null durch eine 1 ersetzt, es wurde also ein Stück des Wertpapiers gekauft. Im Feld 28 ist der Durchschnittspreis, zu dem die Order ausgeführt wurde, angezeigt. Dieser ist mit dem Preis des einzig gekauften Wertpapiers identisch. Beim Kauf höherer Stückzahlen kann es sein, daß die Order in Teilen ausgeführt wurde, d.h. daß z.B. von 100 Stück 50 Stück zu einem Preis und 50 Stück zu einem anderen Preis gekauft wurden. Dann ist die Angabe des Durchschnittpreises natürlich erst sinnvoll.

Der in Figur 2a und 2b gezeigte Kasten kann an beliebiger Stelle in dem Fenster mit der Chartkurve 10 angezeigt werden. Nach Beendigung des Vorgangs kann Eintippen einer Tastenkombination die Bedienungsoberfläche zum Verschwinden gebracht werden.

Bei den anderen Befehlen "Limit Buy/Sell" bzw. "Stop Buy/Sell" ist die Anordnung der Kästen im Fenster von Bedeutung. Die Bedienungsoberflächen für die Befehle "Limit Buy", "Limit Sell" und "Stop Sell" sind in Figur 1 dargestellt. Sie haben denselben Grundaufbau wie der in Figur 2a und 2b gezeigte Kasten. Der Kasten 30 entspricht dabei dem in Figur 2b gezeigten Kasten. Hier war zunächst vorgegeben, daß das System bei einem Kurs von 106,86 Einheiten oder unter diesem Preis ein Stück eines Wertpapiers kaufen soll. Dieser Wert wurde so eingegeben, daß nach dem Anklicken des Icons für den Befehl "Limit Buy" der Mauszeiger, der hier die Form eines Fadenkreuzes aus sich kreuzenden waagerechten und senkrechten Balken hat, in dem Koordinatensystem auf einen bestimmten Punkt mit dem Y-Wert 106,86 geführt wurde und dann die Maus angeklickt wurde. Dieser Wert wurde somit in die Bedienungsoberfläche 30 übernommen, d.h. eine Information bzw. Daten, die in dem Programm phimaxxx hypertrader erzeugt wurde, wurde in das Programm ICOS übertragen, d.h. es besteht eine Datenverbindung zwischen dem Programm für die Chartdarstellung und dem Orderprogramm.

An der Stelle des Werts 106,86 wurde ein parallel zur X-Achse verlaufender grüner Balken 32 eingezeichnet, wobei die Farbe grün für einen Kaufbefehl steht. Eine unterhalb des Balkens angebrachte einseitige Schraffur steht für einen "Limit"-Befehl. Im vorliegenden Falle wurde der Befehl bereits ausgeführt: Wie im Falle der Figur 2b zeigt das Fenster 26 an, daß die Order ausgeführt wurde, und die Fenster 20 und 28 zeigen an, daß ein Stück des Wertpapiers zum Preis von 106,86 Einheiten gekauft wurde.

Nach dem Aufruf des "Limit Buy"-Befehls wurde das Icon für den "Limit Sell"-Befehl angeklickt, worauf in dem Fenster mit der Chartkurve 10 wieder ein Fadenkreuz erschien, das auf einen bestimmten Punkt geführt werden konnte. Beim Anklicken des Punkts wurde der Y-Wert dieses Punktes in die Bedienungsoberfläche 34 für das "Limit Sell"-Orderprogramm übernommen. Ein mit der Y-Koordinate 107,08 parallel zur X-Achse verlaufender roter Balken wurde in das Fenster mit der Chartkurve 10 eingezeichnet, wobei die Farbe rot für einen Verkaufbefehl steht. Der Balken ist oberhalb einseitig schraffiert, was einen "Limit"-Befehl anzeigt. Die Bedienungsoberfläche 34 ist direkt an den Balken 36 gesetzt. Die Order ist im Falle der Bedienungsoberfläche 34 noch nicht abgesandt, dies könnte durch Klicken auf das Feld 22 oder 24 erfolgen.

Zusätzlich zu der Bedienungsoberfläche 34 wurde durch Anklicken des entsprechenden Icons im Programm phimaxxx hypertrader ein "Stop Sell"-Befehl aufgerufen. Wieder erschien das Fadenkreuz, das mittels der Maus auf einen Punkt mit der Y-Koordinate 106,83 geführt wurde. Daraufhin öffnete sich eine Bedienungsoberfläche 38, und ein roter Balken 40 wurde angezeigt. Oberhalb des Balkens 40 ist eine Kreuzschraffur angebracht, die für einen "Stop"-Befehl steht. Im vorliegenden Fall zeigt das Feld 26 die Schrift "Canceled", d.h. der Befehl wurde unterbrochen, bevor eine Order ausgeführt wurde. Die Bedienungsoberfläche 38 könnte durch Eingabe einer Tastenkombination ("Delete") geschlossen werden.

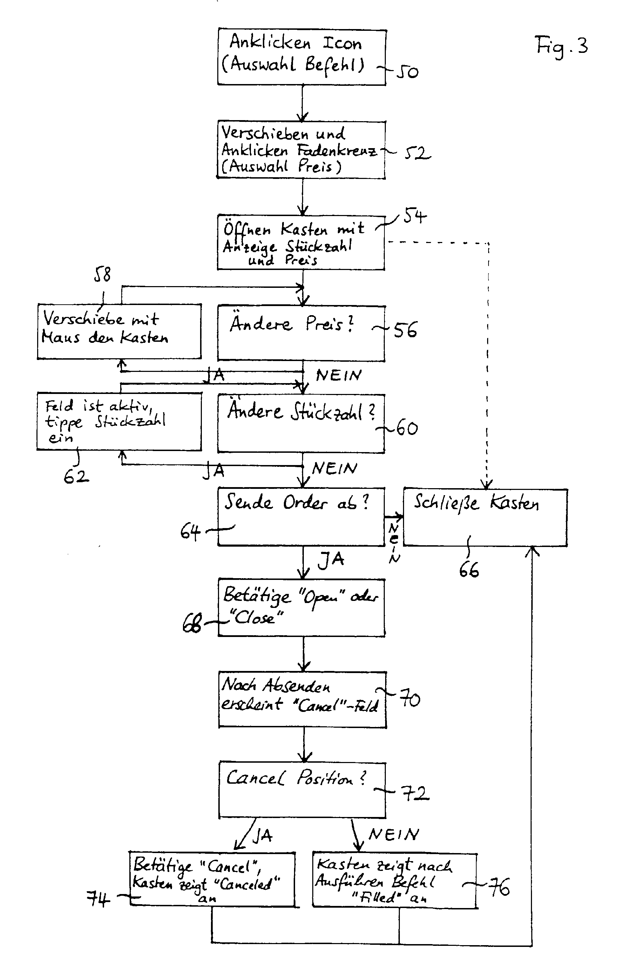

Die zuvor genannten Schritte vom Öffnen des Kastens bzw. der Bedienungsoberfläche bis zum Absenden der Order sind nochmals schematisch in der Figur 3 gezeigt.

Der Benutzer klickt zunächst auf ein Icon und wählt damit einen Befehl aus den sechs zur Verfügung stehenden Befehlen aus (50). Nun erscheinen ein waagerechter und ein senkrechter Balken, die sich an einer durch die Mausposition bestimmten Stelle schneiden (Fadenkreuz). Durch Verschiebung der Maus wird dieses Fadenkreuz auf dem Bildschirm verschoben. Wird nun die Maus angeklickt (52), so bestimmt die Y-Koordinate des Fadenkreuzes den Preis. Es öffnet sich (54) ein Kasten der Art, wie er in Figur 2a und 2b gezeigt ist oder in Figur 1 mit 30, 34 oder 38 bezeichnet ist. In diesem Kasten ist eine bestellte Stückzahl angezeigt, die den voreingestellten Wert "1" hat, und der durch das Fadenkreuz bestimmte Preis. (Im Falle eines "Market"-Befehls entfallen in der Figur 3 die Teile, die den Preis betreffen: Das Fadenkreuz wird an einem beliebigen Punkt angeklickt, und der Preis wird nicht angezeigt.)

Der angezeigte Preis kann nun durch den Benutzer geändert werden (56). Sollte dieser dies wünschen, so verschiebt er (58) mit Hilfe der Maus auf dem Bildschirm den Kasten und ändert so den angezeigten Preis. Dies läßt sich besonders gut anhand der Figur 1 erläutern, in der zu sehen ist, daß die Kästen 30, 34 und 38 direkt an dem den für die Order relevanten Preis angehängt sind, daß also die Y-Koordinaten des Kastens mit dem Preis korreliert sind.

Als nächstes stellt sich für den Benutzer die Frage (60), ob er die Stückzahl ändern möchte. Sollte dies der Fall sein, so gibt er (62) einfach über die Tastatur die Stückzahl ein, das Feld ist bereits aktiv.

Nun kann sich der Benutzer entscheiden, ob er die Order absenden möchte (64). Sollte dies nicht der Fall sein, so kann er den Kasten durch Betätigung von Tasten bzw. einer Tastenkombination (z.B. "Delete") schließen (66). Sollte er die Order absenden wollen, so muß er sich überlegen, ob er mit der Order eine Position öffnet oder schließt und betätigt entsprechend "Open" oder "Close" (68). (Sollte es keine Rolle spielen, ob durch die Order eine Position geöffnet oder geschlossen wird, könnte eine einzige Absendetaste vorgesehen sein.)

Nach dem Absenden der Order erscheint anstelle der Felder "Open" "Close" ein Feld "Cancel". Nun stellt sich für den Benutzer die Frage (72), ob er die Position nicht doch löschen möchte, bevor der Auftrag ausgeführt ist. In diesem Falle betätigt er (74) mit der Maus die Taste "Cancel", und der Kasten zeigt "Canceled" an (wie z.B. der Kasten 38 in Figur 1 in seinem Feld 26). Sollte der Benutzer nicht auf die Taste "cancel" klicken, so wird der Befehl, also die Order, irgendwann ausgeführt, und der Kasten zeigt im Feld 26 den Schriftzug "Filled" (76). Da nun der Kasten keine Funktion mehr hat, kann er wieder geschlossen werden (66).

Die vorliegende Beschreibung hat gezeigt, daß der Händler in Sekundenschnelle durch drei Mausklicks eine Order absenden kann. Mit dem ersten Mausklick wählt er ein Icon aus. Daraufhin erscheint das Fadenkreuz, mit dem er in Sekundenschnelle den Preis in das Ordersystem eingeben kann, ohne ihn einzugeben, sondern es genügt ein Mausklick. Danach öffnet sich eine Bedienungsoberfläche 30, 34 oder 38, und der Händler kann durch Anklicken des Feldes 22 ("Open") oder 24 ("Close") eine Order absenden, ohne weitere Daten eingeben zu müssen. Gegenüber einem herkömmlichen Orderprogramm, in das er sowohl die Art des Wertpapiers eingeben muß, den für die Order relevanten Preis und die Stückzahl, spart der Händler dadurch mehrere Handgriffe und damit für das Ordern an der Börse wertvolle Zeit. Die Eingabe der Art des Wertpapiers entfällt, weil automatisch das Wertpapier verkauft oder gekauft wird, dessen Kurs gerade angezeigt wird. Die Angabe des Preises entfällt, weil entweder zum Marktpreis gekauft oder verkauft wird (Market-Buy oder Sell) oder der Preis mittels des Fadenkreuzes durch Anklicken eingegeben wird. Die Angabe der Stückzahl entfällt, da eine Stückzahl von 1 oder eine beliebige andere Stückzahl vorgegeben ist. Preis und Stückzahl können allerdings wie gesagt noch abgeändert werden.

Intern, also softwaremäßig, kann die Order auf vielfältige Arten und Weisen abgesandt werden. Beispielsweise kann sich hinter der Bedienungsoberfläche ein eigenes Softwaresystem verbergen, das die Daten von dem die Bedienungsoberfläche steuernden System übernimmt und sie in ein Format umwandelt, wie es die Börse für Ordern akzeptiert. Mittelbar kann jedoch auch ein herkömmliches Order-Softwareprogramm über die Software für die Bedienungsoberflächen angesteuert werden, wobei die Eingabe der Daten dann intern, gewissermaßen also ohne Eintippen erfolgt. Die Software des Programms ICOS stellt in diesem Falle eine Art Eintipphilfe dar.

Durch die vorliegende Lösung kann sich der Händler ganz auf seine Entscheidung als solche konzentrieren, ein Wertpapier zu kaufen oder zu verkaufen und ist nicht durch das umständliche Eingeben der Daten abgelenkt.

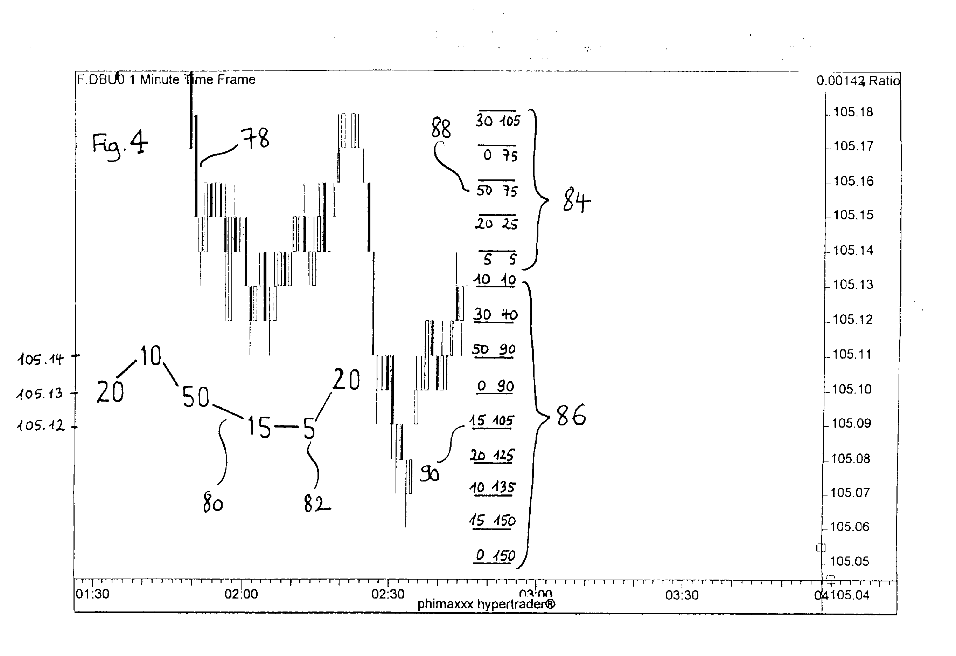

Gemäß einer bevorzugten Ausführungsform wird nun auf den Bildschirm nicht nur die Balken-Chartkurve alleine gezeigt, sondern es stehen auf dem Bildschirm noch weitere Informationen zur Verfügung. Eine solche Darstellung ist in Fig. 4 gezeigt.

Auf dem Bildschirm ist nicht nur die Balken-Chartkurve 78 zu sehen, sondern zusätzlich eine Tic-Chartkurve 80 für die letzten Tics, hier für die letzten sechs Tics. Der Unterschied zwischen der Balken-Chartkurve und der Tic-Chartkurve liegt darin, daß in der Balken-Chartkurve der Preisverlauf innerhalb einer Minute gemittelt wird, während in der Tic-Chartkurve für jede im Markt getätigte Order ein Punkt (Tic) hinzugefügt wird. Die Tic-Chartkurve ist hier in einem kleinen Ausschnitt des Koordinatensystems für die Balken-Chartkurve angezeigt. Für sie gilt die linke Y-Achse des Koordinatensystems. Alternativ kann die TiC-Chartkurve links von der Balken-Chartkurve eingezeichnet werden, wobei dann für sie die rechte Preisskala gültig ist.

Die Besonderheit der Tic-Chartkurve 80 besteht darin, daß nicht nur die Kurve 80 selbst angezeigt wird, sondern an der Stelle, an der die Punkte der Chartkurve liegen, auch die Stückzahl angegeben wird, die der letzten Order entspricht. Beispielsweise bedeutet die Zahl fünf in der Chartkurve, die mit dem Bezugszeichen 82 versehen ist, daß das vorletzte getätigte Geschäft des bestimmten Wertpapiers einen Umsatz von fünf Stück des Wertpapiers zum Preis von 105,12 Einheiten beinhaltete.

Durch diese Darstellung der Tic-Chartkurve 80 mit den Umsatzstückzahlen erhält der Wertpapierhändler als Benutzer des Programms phimaxxx hypertrader eine Information über die zuletzt getätigten Geschäfte. Daraus kann der Kenner Anhaltspunkte für die zukünftige Preisentwicklung des Wertpapiers gewinnen. Die grafische Darstellung erleichtert ihm die Auswertung der Daten betreffend die Umsatzstückzahlen, insbesondere ermöglicht sie ihm ein schnelles Reagieren auf bestimmte Entwicklungen. In Verbindung mit der oben beschriebenen Möglichkeit, schnell eine Order abzugeben, wird die Handlungsgeschwindigkeit des Wertpapierhändlers besonders unterstützt.

Als weitere Information sind in dem in Figur 4 gezeigten Bildschirmausschnitt auch die Daten aus dem Orderbuch für das betreffende Wertpapier dargestellt. Ein Orderbuch enthält Informationen über auf dem Markt befindliche Ordern, und zwar über Kaufwünsche zu einem Höchstkaufpreis (dies entspricht dem oben beschriebenen Befehl "Limit Buy") und Verkaufswünsche zu einem Mindestverkaufspreis (dies entspricht dem oben beschriebenen Befehl "Limit Sell"). Gewöhnlich stehen dem Wertpapierhändler diese Daten in Form einer Tabelle auf einem getrennten Bildschirm zur Verfügung.

Hier aber werden die Daten aus dem Orderbuch grafisch dargestellt, und zwar wird hinter dem letzten Punkt der Chartkurve 78 eine Reihe von Balken eingezeichnet, die jeweils parallel zur x-Achse, d. h. entlang der Preiskoordinate verlaufen und für jeweils einen bestimmten Preis stehen. Die Balken sind in zwei Gruppen unterteilt, nämlich in eine erste Gruppe 84 von Balken für Mindestverkaufspreise (Gruppe der Offers) und eine Gruppe 86 von Balken für Höchstkaufpreise (Gruppe der Bits).

In der Gruppe 84 sind die Balken in roter Farbe dargestellt, in der Gruppe 86 in grüner Farbe.

In der Gruppe 84 sind jeweils links unter den Balken die Orderstückzahlen für die jeweiligen Mindestverkaufspreise angegeben. Beispielsweise entspricht der drittunterste Balken der Gruppe 84, der mit der Bezugszahl 88 bezeichnet ist, einem Preis von 105,16 Einheiten. Die Zahl "50" links unter dem Balken gibt an, daß eine Orderstückzahl von 50 für einen Verkauf zu einem Preis von mindestens 105,16 Einheiten auf dem Markt vorliegt.

Rechts unter dem Balken ist die Summe der Orderstückzahlen für alle niedrigeren und gleichen Mindestverkaufspreise angezeigt. Die Zahl "75" rechts unter dem Balken 88 gibt an, daß Ordern für 75 Stück Wertpapiere zu einem Mindestverkaufspreis von 105,16 Einheiten oder niedriger vorliegen. Die Zahl "75" ist also die Summe aus den links unter den darunterliegenden roten Balken der Gruppe 84 stehenden Zahlen "5" und "20" und der Zahl "50" unter dem Balken 88. Diese Zusatzinformation ist ebenfalls sinnvoll, da derjenige, da der zu einem Mindestpreis von 105,14 und 105,15 Einheiten verkauft, ebenfalls auch zu einem Mindestpreis von 105,16 Einheiten verkaufen würde.

Spiegelbildlich verhält es sich mit den Zahlen, die den Balken der Gruppe 86 zugeordnet sind. Hier steht links über dem Balken jeweils die Zahl der Orderstückzahlen für Ordern zu einem Höchstkaufpreis. Beispielsweise steht links über dem Balken mit der Bezugszahl 90 die Zahl "15", und dies bedeutet, daß für eine Stückzahl von 15 auf dem Markt gegenwärtig eine Order "Limit Buy" zu einem Höchstkaufpreis von 105,09 Einheiten vorliegt.

Die rechts über dem Balken 90 befindliche Zahl 105 ist die Summe der Orderstückzahlen für alle höheren und gleichen Höchstkaufpreise, d. h. der links über den Balken der Gruppe 86 stehenden Zahlen "10", "30" und "50" sowie der über den Balken 90 stehenden Zahl "15".

Durch die grafische Darstellung der Informationen aus dem Orderbuch auf demselben Bildschirm, in dem die Chartkurve 78 gezeigt ist, kann sich der Wertpapierhändler ein sehr genaues Bild über die Auftragslage auf dem Markt machen. Durch die grafische Darstellung fällt es ihm insbesondere leicht, die Ordern dem gegenwärtigen Marktpreis zuzuordnen. Dies ist im Stand der Technik nicht der Fall, weil dort das Orderbuch in einem getrennten Bildschirm oder getrennten Fenster in Form einer Tabelle wiedergegeben wird.

Bei der in Figur 4 gezeigten grafischen Darstellung des Orderbuchs kann der geschulte Wertpapierhändler schnell erkennen, wie sich der Kurs des Wertpapiers aufgrund der vorliegenden Ordern wahrscheinlich entwickeln wird. Dies gilt insbesondere, wenn er wie in Fig. 4 gezeigt, auch die Tic-Chartkurve mit den Daten bezüglich der getätigten Umsätze im Kontext mit den Daten aus dem Orderbuch sieht. Diese erleichterte Auswertung der Daten ermöglicht ihm ein schnelles Reagieren hinsichtlich einer eigenen Abgabe einer Order.

Die in Figur 4 gezeigte Darstellung ist selbstverständlich auch für sich gesehen hilfreich, besonders vorteilhaft aber dann, wenn sie in Verbindung mit dem schnellen Abgeben einer Order aus dem Programm heraus verbunden ist.

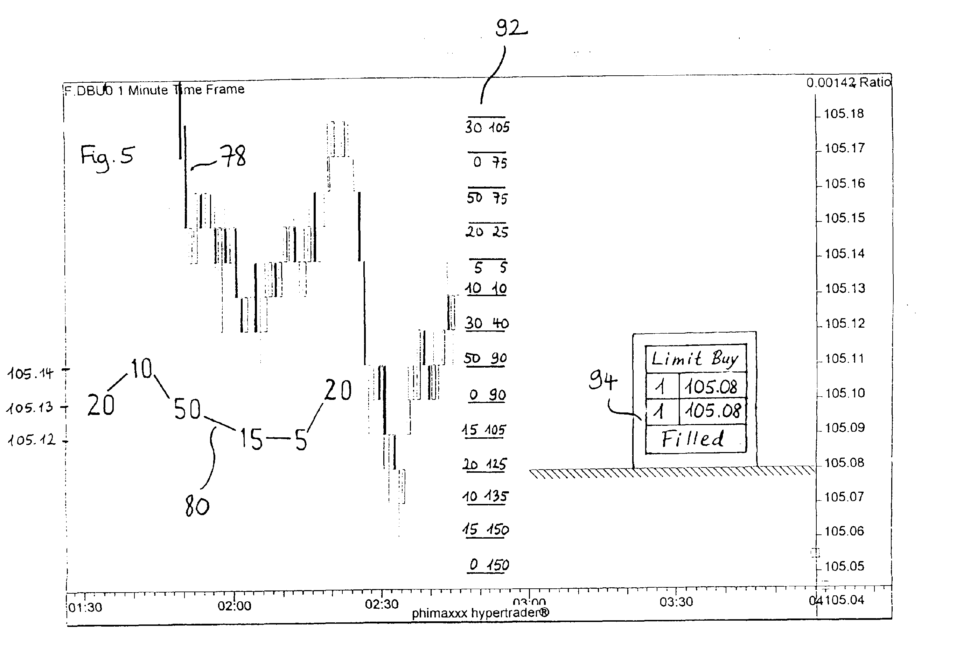

Dies ist in Figur 5 dargestellt. Auf dem Bildschirm ist nicht nur die Balkenchartkurve 78, die Tic-Chartkurve 80 und die grafische Darstellung 92 der Daten aus dem Orderbuch gezeigt, sondern auch ein Kasten 94, der anzeigt, daß der Befehl "Limit Buy" zu einem Preis von 105,08 Einheiten abgegeben wurde, und daß die Order ausgeführt wurde (siehe hierzu die obige Beschreibung des in Figur 1 gezeigten Kastens 30).

Bereits das Öffnen von Bedienungsoberflächen für Orderprogramme aus dem Bildschirm heraus, in dem eine Chartkurve angezeigt wird, trägt zur schnellen Abgabe einer Order bei. Zusätzlich wird die Entscheidungsfindung des die Order abgebenden Wertpapierhändlers noch unterstützt, indem grafisch eine Tic-Chartkurve mit den Umsatzstückzahlen für die zuletzt getätigten Geschäfte und außerdem das Orderbuch für die auf dem Markt für das Wertpapier befindlichen Order in demselben Bildschirm angezeigt werden, so daß die dargestellten Daten leicht ausgewertet werden können.

## Patentansprüche

1. Verfahren zum schnellen Abgeben einer Wertpapier-, Futureskontrakt- oder Warenorder, bei dem
- auf einem Bildschirm in einem Koordinatensystem eine Chartkurve angezeigt wird, die einen ständig aktualisierten Verlauf eines Kurses eines bestimmten Wertpapiers, Futureskontrakts oder einer bestimmten Warenart anzeigt,
- auf eine erste Eingabe des Benutzers hin eine Bedienungsoberfläche geöffnet wird, mit der ein Wertpapier-, Futureskontrakt- oder Warenorderprogramm bedient wird, wobei zumindest das/der mittels des Orderprogramms zu bestellende Wertpapier/Futureskontrakt bzw. die Ware nicht durch einen Benutzer eingegeben wird,
- auf eine zweite Eingabe des Benutzers hin eine Order zum Kauf oder Verkauf des bestimmten Wertpapiers/Futureskontrakts oder der bestimmten Ware zu einem Orderempfänger abgesandt wird.

2. Verfahren nach Anspruch 1, bei dem die erste Eingabe mit dem Starten der Chartkurvenanzeige erfolgt.

3. Verfahren nach Anspruch 1, bei dem die erste Eingabe durch Druck auf zumindest eine Taste einer Tastatur erfolgt.

4. Verfahren nach Anspruch 1, bei dem die erste Eingabe durch zumindestens einen Mausklick erfolgt.

5. Verfahren nach Anspruch 1, bei dem die erste Eingabe durch zumindest einen Mausklick erfolgt, und bei dem eine während des Mausklicks durch einen Mauszeiger in dem Koordinatensystem für die Chartkurve bestimmte Stelle den Preis festlegt, der für die Order als Kaufs- oder Verkaufspreis relevant ist, oder als Grenze für denselben dient, so daß der Preis oder die Grenze nicht durch den Benutzer eingegeben werden muß.

6. Verfahren nach Anspruch 5, bei dem der Preis in der Bedienungsoberfläche angezeigt wird und durch den Benutzer durch Verschieben der Bedienungsoberfläche auf dem Bildschirm abänderbar ist.

7. Verfahren nach Anspruch 5, bei dem der Preis durch einen Balken in dem Koordinatensystem für die Chartkurve angezeigt wird.

8. Verfahren nach Anspruch 5, bei dem der Preis durch einen Balken in dem Koordinatensystem für die Chartkurve zeitlich vor der zweiten Eingabe angezeigt wird.

9. Verfahren nach Anspruch 1, bei dem in dem Orderprogramm eine bestimmte Wertpapier- oder Futureskontraktstückzahl oder Warenmenge vorgebbar ist und danach nicht mehr durch den Benutzer eingegeben werden muß.

10. Verfahren nach Anspruch 9, bei dem die Wertpapier- oder Futureskontraktstückzahl oder Warenmenge in der Bedienungsoberfläche angezeigt wird, vorzugsweise aber durch den Benutzer abänderbar ist.

11. Verfahren nach Anspruch 1, bei dem die Bedienungsoberfläche (30, 34, 38) in einem kleinen Teil des Bildschirms geöffnet wird, so daß die Chartkurve (10) im wesentlichen noch sichtbar bleibt.

12. Verfahren nach Anspruch 1, bei dem auf dem Bildschirm in dem Koordinatensystem mit der Chartkurve zumindest ein Teil der Orderstückzahlen angezeigt wird, die für verschiedene Mindestverkaufspreise oder Höchstkaufpreise in einem elektronischen Orderbuch enthalten sind, wobei die Orderstückzahlen grafisch den ihrem zugehörigen Preis entsprechenden Koordinaten zugeordnet sind.

13. Verfahren nach Anspruch 12, bei dem die Orderstückzahlen dadurch der ihrem zugehörigen Preis entsprechenden Koordinate zugeordnet werden, daß entlang der jeweiligen Koordinate parallel zur Zeitachse ein Balken eingezeichnet wird, neben, auf oder unter den die Orderstückzahlen geschrieben werden.

14. Verfahren nach Anspruch 1, bei dem die Chartkurve eine Tic-Chartkurve ist, und bei der neben den einzelnen Tics die jeweilige Stückzahl der zum Zeitpunkt, der dem Tic entspricht, getätigten Umsätze angezeigt wird.

15. Verfahren nach Anspruch 1, bei dem bei der Chartkurve die Zeitachse so gewählt ist, daß die Zeitabstände zwischen den einzelnen Punkten der Chartkurve größer als die typischen Zeitabstände zwischen zwei Tics sind, und bei dem zusätzlich zu der Chartkurve auf dem Bildschirm eine Tic-Chartkurve angezeigt wird, die einen ständig aktualisierten Verlauf des Kurses des Wertpapiers, Futureskontrakts oder der Warenart anzeigt, und bei dem neben den einzelnen Tics die jeweilige Stückzahl der zu dem dem Tic entsprechenden Zeitpunkt getätigten Umsätze angezeigt wird.

16. Verfahren zum schnellen Abgeben einer Wertpapier-, Futureskontrakt- oder Warenorder, bei dem
- auf einem Bildschirm eine Chartkurve angezeigt wird, die den ständig aktualisierten Verlauf des Kurses eines bestimmten Wertpapiers, Futureskontrakts oder einer bestimmten Warenart anzeigt,
- auf eine einfache Eingabe des Benutzers hin durch ein Orderprogramm eine Order zum Kauf oder Verkauf
a) des bestimmten Wertpapiers, Futureskontrakts oder der bestimmten Ware zu
b) einem Preis, der durch den Preis bestimmt wird, der in der Chartkurve gerade als aktueller Marktpreis angezeigt wird, und
c) in einer vorgegebenen Stückzahl oder zu einer vorgegebenen Warenmenge zu einem Orderempfänger abgesandt wird.

17. Verfahren nach Anspruch 16, bei dem die Eingabe durch Druck auf eine Taste oder Tastenkombination einer Tastatur oder durch Mausklick erfolgt.

18. Computersystem zum schnellen Abgeben von Wertpapier-, Futureskontrakt- oder Warenordern, mit:
a) einem ersten Softwaresystem, mit dem eine Chartkurve eines Wertpapiers, Futureskontrakts oder einer bestimmten Warenart auf einem Bildschirm grafisch darstellbar ist,
b) einem zweiten Softwaresystem, mit dem eine Wertpapier-, Futureskontrakt- oder Warenorder an einen Orderempfänger absendbar ist, dadurch gekennzeichnet, daß die ersten und zweiten Softwaresysteme derart miteinander verknüpft sind, daß Daten, die von dem ersten Softwaresystem verwaltet werden oder in diesem erzeugt werden, in das zweite Softwaresystem übertragbar ist, insbesondere durch eine einfache Eingabe des Benutzers.

19. Computersystem nach Anspruch 18, dadurch gekennzeichnet, daß die Daten von dem ersten Softwaresystem dadurch erzeugt werden, daß in der grafischen Darstellung der Chartkurve zu einem Koordinatensystem mittels eines Cursors oder Mauszeigers mindestens eine Koordinate ausgewählt wird, deren Wert an das zweite Softwaresystem übermittelt wird.

20. Computersystem nach Anspruch 18, dadurch gekennzeichnet, daß auch Daten, die von dem zweiten Softwaresystem verwaltet oder erzeugt werden, in das erste Softwaresystem übertragbar sind.

21. Computersystem nach Anspruch 18, dadurch gekennzeichnet, daß das zweite Softwaresystem in das erste Softwaresystem eingebettet ist.

22. Verfahren zum Erleichtern des Auswertens der in einem zu einem bestimmten Wertpapier oder Futureskontrakt oder einer bestimmten Warenart zugehörigen Orderbuch enthaltenen Daten bezüglich der Orderstückzahl für verschiedene Mindestverkaufspreise oder Höchstkaufpreise, bei dem
- auf einem Bildschirm in einem Koordinatensystem mit den Koordinaten Zeit und Preis eine Chartkurve angezeigt wird, die den ständig aktualisierten Verlauf des Kurses des Wertpapiers, Futureskontrakt oder der Warenart anzeigt und
- in dem Koordinatensystem zumindest ein Teil der Orderstückzahlen angezeigt wird, wobei die Orderstückzahlen grafisch den ihrem zugehörigen Preis entsprechenden Koordinaten zugeordnet sind.

23. Verfahren nach Anspruch 22, bei dem die Orderstückzahlen dadurch der ihrem zugehörigen Preis entsprechenden Koordinate zugeordnet werden, daß entlang der jeweiligen Koordinate parallel zur Zeitachse ein Balken eingezeichnet wird, neben, auf oder unter den die Orderstückzahlen geschrieben werden.

24. Verfahren nach Anspruch 23, bei dem alle Balken und Orderstückzahlen an derselben Stelle der Zeitachse angeordnet sind.

25. Verfahren nach Anspruch 22, bei dem die Orderstückzahlen dadurch der ihrem zugehörigen Preis entsprechenden Koordinate zugeordnet werden, daß auf einem Koordinatenpunkt mit der jeweiligen Koordinate eine Markierung, insbesondere ein Kreuz, eingezeichnet wird, neben, auf oder unter die die jeweilige Orderstückzahl geschrieben wird.

26. Verfahren nach Anspruch 22, bei dem die Orderstückzahlen dadurch der ihrem zugehörigen Preis entsprechenden Koordinate zugeordnet werden, daß sie im wesentlichen an der Stelle der Koordinate angezeigt werden.

27. Verfahren nach Anspruch 22, bei dem neben, auf oder unter den Orderstückzahlen für die Mindestverkaufspreise die Summen der Orderstückzahlen für alle niedrigeren und gleichen Mindestverkaufspreise und neben, auf oder unter den Orderstückzahlen für die Höchstkaufpreise die Summen der Orderstückzahlen für alle höheren und gleichen Höchstkaufpreise angezeigt werden.

28. Verfahren nach Anspruch 22, bei dem die Orderstückzahlen für die Mindestverkaufspreise farbig, insbesondere rot, und die Orderstückzahlen für die Höchstkaufpreise andersfarbig, insbesondere grün angezeigt werden.

29. Verfahren nach Anspruch 22, bei die Chartkurve eine Tic-Chartkurve ist und neben den einzelnen Tics die jeweilige Stückzahl der zum Zeitpunkt, der dem Tic entspricht, getätigten Umsätze angezeigt wird.

30. Verfahren nach Anspruch 22, bei dem die Zeitachse so gewählt ist, daß die Zeitabstände zwischen einzelnen Punkten der Chartkurve größer als die typischen Zeitabstände zwischen zwei Tics sind, und wobei zusätzlich zu der Chartkurve auf dem Bildschirm eine Tic-Chartkurve angezeigt wird, die den ständig aktualisierten Verlauf des Kurses des Wertpapiers, Futureskontrakts oder der Warenart anzeigt, wobei auf, unter oder neben den einzelnen Tics die jeweilige Stückzahl der getätigten Umsätze angezeigt wird.

31. Verfahren zum Erleichtern des Auswertens der zu einem bestimmten Wertpapier oder Futureskontrakt oder einer bestimmten Warenart zugehörigen Daten bezüglich der Stückzahl der getätigten Umsätze zu bestimmten Zeitpunkten, bei dem
- auf einem Bildschirm eine Tic-Chartkurve angezeigt wird, die einen ständig aktualisierten Verlauf eines Kurses des Wertpapiers, Futureskontrakt oder der Warenart anzeigt, und
- neben oder auf einzelnen Tics die jeweilige Stückzahl der getätigten Umsätze angezeigt wird.

32. Verfahren nach Anspruch 31, dadurch gekennzeichnet, daß auf dem Bildschirm in einem Koordinatensystem mit zumindest der Koordinate Zeit eine zweite Chartkurve angezeigt wird, die keine Tic-Chartkurve ist.

33. Verfahren nach Anspruch 32, dadurch gekennzeichnet, daß die Tic-Chartkurve in einem kleinen Ausschnitt des Koordinatensystems für die zweite Chartkurve und für eine bestimmte Anzahl der letzten Tics angezeigt wird.
